# EUROPEAN PATENT APPLICATION

(11) **EP 2 995 359 A1**
(43) Date of publication of application: **16.03.2016**
(21) Application number: 14794663.6
(22) Date of filing: 09.05.2014
(51) Int. Cl.: B01D 35/30, F02M 37/22

(54) **FUEL FILTER WITH BODY DRAIN**

(30) Priority: 10.05.2013 BR 102013011662
(71) Applicant: Mahle Metal Leve S/A, 13210-877 Jundiaí, SP (BR); Mahle International GmbH, 70376 Stuttgart (DE)
(72) Inventor: DE AGUIAR, Bruno, 13848-054 Mogi-Guaçu - SP (BR); MOREIRA, Fábio, 13280-000 Vinhedo - SP (BR); JUN YOSHINO, Fernando, 13214-730 Jundiaí - SP (BR); FRITZ, Luiz Carlos, 13339-070 Indaiatuba - SP (BR); RASCIO, Raphael, 13219-201 Jundiaí - SP (BR)
(74) Representative: BRP Renaud & Partner mbB Rechtsanwälte Patentanwälte Steuerberater
(86) International application number: PCT/BR2014/000148
(87) International publication number: WO 2014/179851

(57) **Abstract**

The present invention relates to a filter (10), more particularly to a lid for a filter (10) that allows fluid to be suitably drained when a filter element (20) is replaced. In one embodiment of the invention, the filter (10) comprises at least one body (30) and at least one filter element (20) arranged inside the body (30), which is closed by a lid (40), the body comprising means for draining the fluid fuel therein in a controlled manner.

## Description

### Field of the invention

The invention described here relates to a filter, and more particularly the invention concerns a filter which permits adequate drainage of fluid when a filter element is replaced.

### Antecedents of the invention

The system for supply of fuel of a motor vehicle which uses an internal combustion engine has the function of permitting conduction of the fuel from a tank or reservoir to the combustion chamber, with a substantially constant pressure.

Normally, a system of this type comprises a supply pump, a fuel filter, a distributor pipe, a pressure regulator and injection valves. In operation, the supply pump pressurizes the system, which allows the fuel to be conveyed from the tank to the distributor pipe, passing via the fuel line. The pressure regulator valve controls the pressure in said line. On this course, the fuel also passes via a filter positioned at any point between the fuel pump and the injection valves.

As is already known in the prior art, the filters consist of means which can permit the flow of a necessary substance, such as the combustible fluid, and at the same time obstruct the passage of other undesirable substances such as, for example, solid particles or also extraneous fluids.

In particular, a fuel filter serves the purpose of retaining impurities contained in the fuel by means of a filter element, such as a paper, enveloped by a body normally constituted by nylon, steel, aluminum or plastic.

In other words, the fuel filters protect the fuel supply system, eliminating or at least reducing the impurities present in the fuel which are derived from the transport, storage, and/or from the tank itself, therefore preventing the obstruction of orifices of the injector valves. Thus, the filters provide better performance of the engine, and consequently an increase in its service life.

Ideally, the filter should provide high efficiency in the retention of contaminants, and at the same time low resistance to the flow of fuel. In addition, the filter must be designed such as to guarantee good sealing and high resistance to internal pressures.

At present, because of the alteration of the fuel system to an electronic injection system, the filter has become an essential part, since the undesirable particles which exist in the fuel can cause excessive wear of the components of the injection system, as well as being able to obstruct the injector nozzles of the electronic injection system.

Consequently, the lack of a fuel filter would undoubtedly cause problems in starting of the engine, and would detract significantly from adequate operation of it, causing an increase in the consumption of fuel and wear of the components, and also possible malfunctions.

The service life of a filter depends on the quantity of impurities contained in the fuel, and varies according to the mileage indicated for each model/type of vehicle. In all cases, the filter must be changed periodically in preventative maintenance operations.

In these maintenance operations, the filter is normally discarded completely when it reaches the end of its planned service life, since it is not possible to separate the filter element from the body in order to replace it, as the filter consists of a single part comprising a permanently closed body, with the filter element already fitted in its interior. It will be appreciated that this process is not the most appropriate one, both from the economic and environmental/ecological point of view, since the material of the body is not usually biodegradable. Furthermore, since the fuel filter is made of different materials, i.e. the material of the body and the material of the filter element, and since it is in a single piece, it is difficult or even impossible to separate these materials for a suitable environmentally friendly disposal destination.

For the purpose of solving this problem, the applicant disclosed in publication WO 2012/083405 a fuel filter, the filter element of which can be separated from the body. This filter is provided with a lid which can be detached from the body, thus allowing the filter element to be replaced without needing to discard the body, and also without needing to disconnect the filter from the fuel line. By this means, the filter element alone can be discarded, and there is no need to replace the body. In addition to the lower cost associated with the replacement of the filter, this solution also permits suitable disposal of the filter element, consequently having a lower impact on the environment.

Although the solution proposed is suitable for the purposes of replacement and disposal of the filter, it has been found that when the filter element is replaced, it may happen that the fuel supply line is still pressurized, meaning that the fuel contained in the interior of the filter escapes at high pressure.

Thus, when the lid is removed for replacement of the filter element, the fuel is ejected at high pressure, and may reach parts of the vehicle and even the person who is replacing the filter element. Since the fuel filter can be in the engine compartment, if one of the parts reached by the fuel is still hot, a fire may be caused. If the fuel filter is located in the chassis of the vehicle, in its lower part, it may reach surrounding people and contaminate the ground where the filter element is being replaced. In addition, since fuel generally has a solvent property, it can also damage rubber and plastic on the vehicle.

Thus, an objective of the present invention is to eliminate the problems encountered in the prior art in relation to replacement of a filter element of a fuel filter.

### DESCRIPTION OF THE INVENTION

In order to eliminate the deficiencies encountered in the aforementioned prior art, the invention relates, inter alia, to a filter which comprises at least one body and at least one filter element, the filter element being designed to be positioned in the interior of the body which is closed by a lid, and the body comprises a means for draining in a controlled manner the combustible fluid contained in its interior.

According to additional and/or alternative embodiments of the invention, the following characteristics, alone or in technically possible combinations, can also be present:
- said means for draining the combustible fluid in a controlled manner are a portion with a larger diameter formed internally on the lateral wall of the body, close to, and in the direction of the opening of, the body;
- the portion with a larger diameter has a diameter which increases in the direction of the opening of the body;
- said means for draining the combustible fluid in a controlled manner are at least one channel formed internally in the lateral wall of the body, close to, and in the direction of the opening of, the body;
- the body comprises more than one channel formed internally in the lateral wall of the body, close to, and in the direction of the opening of, the body;
- the filter is a fuel filter.

### BRIEF DESCRIPTION OF THE DRAWINGS

The invention will now be described in relation with its particular embodiments, with reference to the appended figures. These figures are schematic, and their dimensions and/or proportions may not correspond to the reality, since they are designed simply to describe the embodiments of the invention didactically, without imposing any limitations other than those defined in the following claims, and wherein:
Figure 1 is a lateral view in transverse cross-section of a filter according to an embodiment of the invention; and
Figure 2 is a lateral view in cross-section showing the flow of fuel when a filter element is replaced, according to the filter in figure 1.

### DESCRIPTION OF EMBODIMENTS OF THE INVENTION

The invention is now described in relation to its particular embodiments, with reference to the appended figures. In the figures and in the following description, similar parts are indicated throughout the description and in the figures by the same reference numbers. The figures are not necessarily to scale. Certain characteristics may be shown with an exaggerated scale, or in a particular form, or somewhat schematically, and some details of conventional elements may not be represented, for the sake of greater clarity and concision of this description. The invention can have embodiments with different forms. Specific embodiments are described in detail and shown in the figures on the understanding that these must be considered examples of the principles involved, and that they are not designed to limit the invention which is simply illustrated and described in the present description. It must be acknowledged that the various teachings of the embodiments discussed hereinafter can be used separately or in any suitable combination in order to produce the same technical effects.

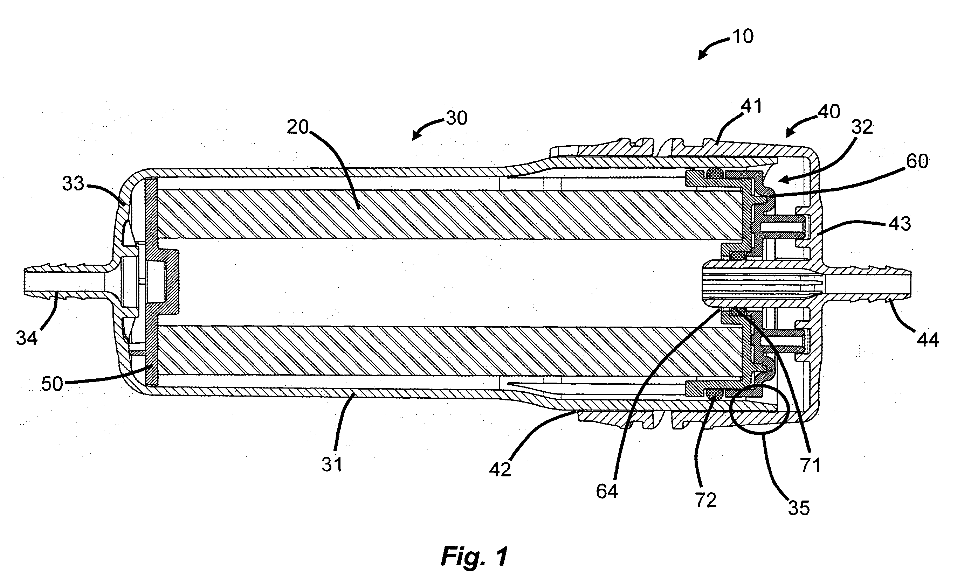

Figure 1 shows a lateral view in transverse cross-section of a filter 10 which can be dismantled, i.e. a filter, the filter element 20 of which can be detached from the filter. The filter 10 is generally formed by a body 30 which envelopes the filter element 20, and generally has a substantially cylindrical form. It will be appreciated that the body can have any other technically suitable form. The body 30 consists of a lateral wall 31 which extends axially, and at its ends it defines on one side an opening 32 which is designed to receive a filter element 20, and on the other side a closed wall 33 which incorporates an input 34 (or output) for the fluid which is filtered. In particular, the filter 10 described here is a filter which is designed to filter a combustible fluid, such as, without being limited to this, gasoline, ethanol, diesel oil, etc. For this purpose, the input 34 (or output) is connected to the fuel supply line (not represented).

Also in relation to figure 1, there is also illustration of the filter element 20, which is enveloped by the body 30, and can be dissociated from it. Since the embodiment represented here discloses a body with a substantially cylindrical form, the filter element 20 can have a corresponding form which is also cylindrical. Typically, the filter element 20 is made of a material which is suitable for retaining undesirable elements which must be retained, and its interior is generally hollow, such as to permit a suitable flow of fluid which is designed to be filtered. As illustrated in this embodiment, the filter element 20 comprises firstly a flange 50 which is designed to be supported on the closed wall 33 of the body 30, and secondly a base 60, which is designed to form a support against the lid 40 which is secured on the body 30. The provision of a flange 50 and a base 60 for the filter element 20 at its ends is important in order to form a seal for the hollow inner portion of the filter element 20 relative to the outer portion, such as to permit correct guidance of the flow of fluid for suitable filtering. In addition, since the material of the filter element 20 is generally a material with low mechanical strength, such as a paper or fabric, both the flange 50 and the base 60 act as a means for mechanical reinforcement, so that the filter element 20 does not collapse when it is supported firstly on the closed wall 33 of the body 30, and secondly on the lid 40.

Figure 1 also shows a lid 40 of the filter 10, comprising a lateral wall 41 which defines a continuous perimeter, and delimits firstly an opening 42 which is also designed to receive the filter element 20, and to be secured on the body 30, and secondly a closed wall 43 which is integral with the lateral wall 41, and incorporates an output 44 (or input) for the fluid being filtered. In this specific embodiment, the output 44 is connected to a fuel supply line (not represented).

Figure 1 represents the fitted filter 10, i.e. comprising the body 30 associated with the lid 40 and containing in its interior the filter element 20 which is supported firstly on the body by means of the flange 50, and secondly on the lid by means of a base 60.

The base 60 of the filter element 20 can also comprise sealing means in order to assist the correct flow of fluid to be filtered. As can be seen in figure 1, these sealing means can consist for example of one or more elastomer rings (O-rings) arranged suitably for sealing of the filter 10. The fluid output 44 of this embodiment is designed firstly such that the outer portion of the lid and secondly the inner portion of the lid are designed to be fitted in an opening 64 provided in the base 60 of the filter element 20. By this means, the opening 64 in the base 60 and the output 44 provided in the lid 40 must be substantially aligned. For this purpose, the base 60 of the filter element 20 can comprise an inner sealing ring 71 in order to seal the space which exists between the output 44 and the opening 64 in the base 60. In addition, an outer sealing ring 72 can be provided in the base 60 in order to seal the space which exists between said base 60 and the body 30 of the filter 10.

In operation, in the case of a filter for a combustible fluid, the fluid enters firstly through the input 34 defined in the body 30 and envelops the interior of it in the space delimited between the flange 50 and the closed wall 33 of the body 30, and through the space delimited by the lateral wall 31 of the body 30 and the outer portion of the filter 10. Because of the pressure which exists in a fuel supply line, which is generally constituted by a system pressurized by a pump, the fluid is forced into the interior of the filter element 20, and passes through its hollow inner portion, in the direction of the output 44 provided in the lid 40.

The elements described here, and the functioning of the filter are known and described in greater detail in publication WO 2012/083405, which is incorporated here for reference.

However, it has been found that, when the lid 40 is dismantled for removal and replacement of the filter element, the fuel supply line can still be pressurized. The pressure on the line can be significant, since it generally operates at between 4 and 6 bars. The removal of the lid generates a direct flow of combustible fluid without control of the direction of this jet, such that it can reach hot parts of the engine, rubber and plastic, and even the person who is replacing the filter element, as well as possibly contaminating the ground.

In this respect, the invention provides a means for controlled drainage of the fluid contained in the interior of the filter when the filter element is replaced.

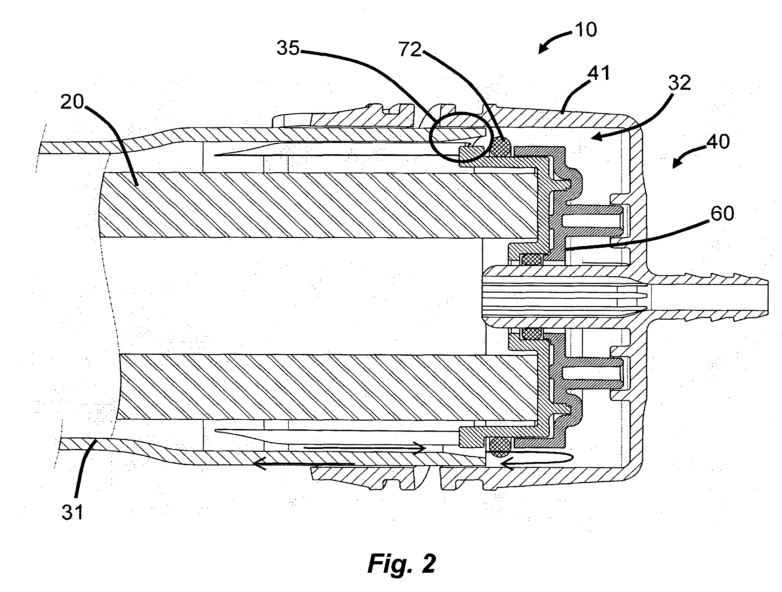

For this purpose, and as illustrated in figure 2, in a possible embodiment of the invention the body can comprise in its open side a means for controlled drainage of the combustible fluid. In particular, this means for controlled drainage of the combustible fluid is a portion with a larger diameter 35 formed on the inner wall close to the opening in the body. Thus, as persons skilled in the art can appreciate, when the lid is dismantled for removal and replacement of the filter element, as the lid is moved in the axial direction outside the body, the outer sealing ring 72 moves integrally with the lid, and, when it reaches the portion with a larger diameter 35 formed on the inner lateral wall of the body, it will cease being in contact with the appropriate sealing against this wall, and therefore will allow the fluid to be drained from the interior of the body, without the lid being totally disconnected from it. Consequently, the combustible fluid can be drained in a controlled manner, and will be conducted to the outer lateral wall of the body, and can then be collected suitably, as illustrated by the arrows represented in figure 2. It will be appreciated that, depending on the pressure of the fluid in the interior of the body, the person who is dismantling the lid from the body will be able to control this drainage simply by allowing a greater or lesser axial distance of the lid in relation to the body.

Also in particular, the portion with a larger diameter 35 formed on the inner wall in the opening of the body can have a diameter which is progressive, i.e. a diameter which increases in relation to the open portion of the body, such that the control of the drainage of the fluid contained in the interior of the body is even better.

The embodiment illustrated here discloses the use of a portion with a larger diameter formed on the inner wall of the body close to, and in the direction of, the opening in the body. However other means can be provided for draining the combustible fluid, such as, without being limited to this, the use of one or more channels also formed in the inner part of the lateral wall of the body, close to, and in the direction of, the opening in the body.

Although the invention has been described in relation to particular embodiments, persons skilled in the art will be able to make alterations to the form and structures, or also combine the elements described here in a form which has not been described, without however departing from the principles taught here. Consequently, the appended claims must be interpreted as covering all and any equivalents which come within the scope of the invention.

### List of parts:

- 10 -: Filter
- 20 -: Filter element
- 30 -: Body
- 31 -: Lateral wall of the body
- 32 -: Opening in the body
- 33 -: Closed wall of the body
- 34 -: Input (or output) for fluid provided in the body
- 35 -: Means for drainage
- 40 -: Lid
- 41 -: Lateral wall of the lid
- 42 -: Opening in the lid
- 43 -: Closed wall of the lid
- 44 -: Output (or input) for fluid provided in the lid
- 50 -: Flange
- 60 -: Base of the filter element
- 64 -: Opening in the base
- 71 -: Inner sealing ring
- 72 -: Outer sealing ring

## Claims

1. A filter (10) which comprises at least one body (30) and at least one filter element (20), the filter element being designed to be positioned in the interior of the body which is closed by a lid (40), **characterized in that** the body comprises a means for draining in a controlled manner the combustible fluid contained in its interior.

2. The filter as claimed in claim 1, **characterized in that** said means for draining the combustible fluid in a controlled manner are a portion with a larger diameter (35) formed internally on the lateral wall (31) of the body, close to, and in the direction of the opening (32) of, the body.

3. The filter as claimed in claim 2, **characterized in that** the portion with a larger diameter has a diameter which increases in the direction of the opening of the body.

4. The filter as claimed in claim 1, **characterized in that** said means for draining the combustible fluid in a controlled manner are at least one channel formed internally in the lateral wall of the body, close to, and in the direction of the opening of, the body.

5. The filter as claimed in claim 4, **characterized in that** it comprises more than one channel formed internally in the lateral wall of the body, close to, and in the direction of the opening of, the body.

6. The filter as claimed in claim 1, **characterized in that** it is a fuel filter.
